(19) Europäisches Patentamt
European Patent Office
Office européen des brevets

(11) EP 0 626 414 B1

(12) EUROPÄISCHE PATENTSCHRIFT

(45) Veröffentlichungstag und Bekanntmachung des Hinweises auf die Patenterteilung:
**05.02.1997 Patentblatt 1997/06**

(51) Int Cl.$^6$: **C08G 77/08**, C08G 79/02

(21) Anmeldenummer: **94108131.7**

(22) Anmeldetag: **26.05.1994**

(54) **Organosiliciumreste aufweisende Phosphazene, Verfahren zu deren Herstellung und deren Verwendung**

Organosilicon group containing phosphazenes, process for their preparation and their use

Phosphazènes contenant des groupes organosiliciques, procédé pour leur préparation et leur emploi

(84) Benannte Vertragsstaaten:
**BE DE ES FR GB IT NL**

(30) Priorität: **28.05.1993 DE 4317978**

(43) Veröffentlichungstag der Anmeldung:
**30.11.1994 Patentblatt 1994/48**

(73) Patentinhaber: **Wacker-Chemie GmbH
81737 München (DE)**

(72) Erfinder:
- **Hager, Rudolf, Dr.
D-84503 Altötting (DE)**
- **Deubzer, Bernward, Dr.
D-84489 Burghausen (DE)**
- **Schneider, Otto, Dr.
D-84489 Burghausen (DE)**

(56) Entgegenhaltungen:
**EP-A- 0 026 685**
**EP-A- 0 305 737**
**EP-A- 0 394 918**
**GB-A- 2 252 975**
**US-A- 4 720 533**

- **H.R. Allcock et al, Macromolecules, Bd.18, Nr.2 (1985), S.139-144**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 626 414 B1

## Beschreibung

Die Erfindung betrifft sauerstoffhaltige Chlorphosphazene mit über Sauerstoff an Phosphor gebundenen Organosiliciumresten, ein Verfahren zu deren Herstellung sowie deren Verwendung in Verfahren zum Kondensieren und/oder Äquilibrieren von Organosiliciumverbindungen.

Chlorphosphazene, häufig auch als Phosphornitrilchloride oder Phosphornitridchloride bezeichnet, sind schon seit langem als Katalysatoren für Kondensations- und/oder Äquilibrierungsreaktionen von Organosiliciumverbindungen bekannt. Hierzu sei beispielsweise auf DE 22 29 514 B (Wacker-Chemie GmbH, ausgegeben am 20. April 1978) bzw. die entsprechende US 3,839,388 verwiesen, in der Chlorphosphazene mit einem Verhältnis von Phosphor zu Stickstoff größer als eins beschrieben werden. Nachteilig ist die begrenzte Löslichkeit dieser vorwiegend aus ionischen Phosphazenbausteinen bestehenden Katalysatoren in organischen Lösungsmitteln. Des weiteren wird in DE 37 25 377 A (Wacker-Chemie GmbH; ausgegeben am 9. Februar 1989) bzw. der entsprechenden US-Anmeldung mit der Seriennummer 226023 die Umsetzung dieser Phosphornitrilchloride mit cyclischen Diorganopolysiloxanen beschrieben. Sauerstoffhaltige Chlorphosphazene, insbesondere Phosphorylchlorphosphazene, d.h. Chlorphosphazene mit mindestens einer $PCl_2O$-Gruppe, die sich ebenfalls als Katalysatoren für Kondensations- und/oder Äquilibrierungsreaktionen von Organosiliciumverbindungen eignen, sind dagegen in praktisch allen organischen Lösungsmitteln löslich. Nicht selten kommt es aber vor, daß organische Lösungsmittel generell nicht erwünscht sind. In solchen Fällen können die sauerstoffhaltigen Chlorphosphazene, von denen viele flüssig sind, auch ohne Lösungsmittel eingesetzt werden, was jedoch häufig zu Problemen, insbesondere hinsichtlich der Dosierung bzw. der homogenen Verteilung des Katalysators in der Reaktionsmischung, führt.

Gegenstand der Erfindung sind Organosiliciumreste aufweisende sauerstoffhaltige Phosphazene der allgemeinen Formel

$$Z\text{-}PCl_2{=}N(\text{-}PCl_2{=}N)_n\text{-}PCl_2O \qquad (I),$$

worin

Z einen über Sauerstoff an Phosphor gebundenen Organosiliciumrest bedeutet und

n 0 oder eine ganze Zahl von 1 bis 6, bevorzugt 0 oder eine ganze Zahl von 1 bis 4, besonders bevorzugt eine ganze Zahl von 1 bis 3, bedeutet.

Obwohl durch Formel (I) nicht ausgedrückt, können die Chloratome ganz oder teilweise durch Reste Q ersetzt sein, wobei Q einwertige organische Reste, wie Alkoxyreste, Aryloxyreste, andere Halogenatome als Chlor, Organosiliciumreste und phosphorhaltige Reste bedeutet und diese Verbindungen im folgenden unter der Bezeichnung "Chlorphosphazene" mitumfaßt werden sollen.

Bevorzugt handelt es sich bei den Organosiliciumreste aufweisenden sauerstoffhaltigen Chlorphosphazenen der Formel (I) um solche, in denen kein Chloratom durch einen Rest Q substituiert ist.

Bei den erfindungsgemäßen, Organosiliciumreste aufweisenden sauerstoffhaltigen Chlorphosphazenen besteht die folgende Tautomerie:

$$\equiv SiO\text{-}PCl_2{=}N\text{-} \quad <=====> \quad O{=}PCl_2\text{-}\underset{Si}{N}\text{-}$$

Alle Ausführungen zu Verbindungen mit SiOP-Bindungen gelten somit uneingeschränkt auch für die entsprechenden Tautomeren.

Bei dem Organosiliciumrest Z handelt es sich bevorzugt um über Sauerstoff an Phosphor gebundene Reste aus Einheiten der allgemeinen Formel

$$R_aX_bSiO_{\frac{4-a-b}{2}} \qquad (II),$$

worin

R gleich oder verschieden sein kann und Wasserstoffatom oder einwertigen organischen Rest bedeutet,

X gleich oder verschieden sein kann und Chloratom oder Rest $-OR^1$ bedeutet mit $R^1$ gleich einwertigem organischen Rest,

a 0, 1, 2 oder 3, bevorzugt 1, 2 oder 3, besonders bevorzugt 2 oder 3, ist und

b 0, 1 oder 2, bevorzugt 0 oder 1, ist,

mit der Maßgabe, daß die Summe aus a und b kleiner oder gleich 3 ist.

Der durchschnittliche Wert von a liegt bevorzugt zwischen 1,5 und 3, besonders bevorzugt zwischen 1,8 und 2,7.

Der durchschnittliche Wert von b liegt bevorzugt zwischen 0 und 1, besonders bevorzugt zwischen 0,01 und 0,5.

Bei Rest R handelt es sich bevorzugt um gegebenenfalls substituierte Kohlenwasserstoffreste mit 1 bis 12 Kohlenstoffatomen, wobei Kohlenwasserstoffreste mit 1 bis 6 Kohlenstoffatomen, insbesondere der Methylrest, besonders bevorzugt sind.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl-, Allyl-, 3-Norbornenyl-, n-5-Hexenyl- und 4-Vinylcyclohexylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Naphthyl- und Biphenylylrest; Alkarylreste, wie o-, m-, p-Tolylreste, Xylylreste und Ethylphenylreste; Aralkylreste, wie der Benzylrest, der α- und der β-Phenylethylrest.

Beispiele für einwertige, substituierte Kohlenwasserstoffreste R sind Cyanalkylreste, wie der β-Cyanethylrest, Halogenalkylreste, wie der 3,3,3-Trifluorpropylrest und der γ-Chlorpropylrest, Halogenarylreste, wie o-, m- und p-Chlorphenylreste, Acyloxyalkylreste, wie der γ-Acryloxypropylrest und der γ-Methacryloxypropylrest.

Bei Rest $R^1$ handelt es sich bevorzugt um Alkylreste mit 1 bis 4 Kohlenstoffatomen, besonders bevorzugt um den Methyl- und den Ethylrest.

Beispiele für Gruppen X gleich Rest $-OR^1$ sind Alkoxyreste, wie der Methoxy- und der Ethoxyrest.

Bei den erfindungsgemäßen Organosiliciumreste aufweisenden sauerstoffhaltigen Chlorphosphazenen handelt es sich vorzugsweise um solche mit einem Molekulargewicht von 300 bis 30000.

Beispiele für die erfindungsgemäßen Organosiliciumreste aufweisenden Phosphazene sind

$Me_3SiO-PCl_2=N-PCl_2O$ ,
$Me_2ViSiO-PCl_2=N-PCl_2O$ ,
$Me_3Si[OSiMe_2]_5O-PCl_2=N-PCl_2O$ ,
$Me_3Si[OSiMe_2]_{10}O-PCl_2=N-PCl_2=N-PCl_2O$ ,
$Me_3Si[OSiMe_2]_{40}O-PCl_2=N-PCl_2=N-PCl_2O$ ,
$Me_2ClSi[OSiMe_2]_4O-PCl_2=N-PCl_2=N-PCl_2O$ ,
$Me_2ClSi[OSiMe_2]_{100}O-PCl_2=N-PCl_2=N-PCl_2O$ ,
$Me_2(MeO)Si[OSiMe_2]_{50}O-PCl_2=N-PCl_2=N-PCl_2O$ ,
$Me(EtO)_2SiO-PCl_2=N-PCl_2=N-PCl_2O$ ,
$Me_3SiO-PCl_2=N(-PCl_2=N)_2-PCl_2O$ ,
$Me_2PhSiO-PCl_2=N(-PCl_2=N)_2-PCl_2O$ ,
$Me_2ClSi[OSiMe_2]_8O-PCl_2=N(-PCl_2=N)_2-PCl_2O$ ,
$Me_2ClSi[OSiMe_2]_4O-PCl_2=N(-PCl_2=N)_3-PCl_2O$ , $(Me_3SiO)_2MeSiO-PCl_2=N(-PCl_2=N)_3-PCl_2O$ ,
$Me_2ClSi[OSiMe_2]_4O-PCl_2=N(-PCl_2=N)_4-PCl_2O$ ,
$Me_3Si[OSiMe_2]_{10}O-PCl_2=N(-PCl_2=N)_5-PCl_2O$ ,

wobei Me gleich Methylrest, Ph gleich Phenylrest und Vi gleich Vinylrest ist.

Ein weiterer Gegenstand der Erfindung ist ein Verfahren zur Herstellung von Organosiliciumreste aufweisenden sauerstoffhaltigen Phosphazenen, dadurch gekennzeichnet, daß mindestens ein sauerstoffhaltiges Phosphazen der Formel

$$PCl_3=N(-PCl_2=N)_n-PCl_2O \quad (III),$$

worin

n 0 oder eine ganze Zahl von 1 bis 6, bevorzugt 0 oder eine ganze Zahl von 1 bis 4, besonders bevorzugt eine ganze Zahl von 1 bis 3, bedeutet,

mit mindestens einer Organosiliciumverbindung aus Einheiten der Formel

$$R^2_c(R^3O)_dSiO_{\frac{4-d-c}{2}} \qquad (IV),$$

worin

$R^2$ gleich oder verschieden sein kann und eine für Rest R angegebene Bedeutung hat,
$R^3$ gleich oder verschieden sein kann und eine für Rest $R^1$ angegebene Bedeutung hat,
c 0, 1, 2 oder 3, bevorzugt 1, 2 oder 3, besonders bevorzugt 2 oder 3, ist und
d 0, 1, 2 oder 3, bevorzugt 0, 1 oder 2, besonders bevorzugt 0 oder 1, ist,
mit der Maßgabe, daß die Summe aus c und d kleiner oder gleich vier ist,

umgesetzt wird.

Obwohl durch Formel (III) nicht ausgedrückt, können die Chloratome teilweise durch Reste Q ersetzt sein, wobei Q die obengenannte Bedeutung hat und diese Verbindungen im folgenden unter der Bezeichnung "Chlorphosphazene" mit umfaßt werden sollen.

Bevorzugt handelt es sich bei den sauerstoffhaltigen Chlorphosphazenen der Formel (III) um solche, in denen kein Chloratom durch einen Rest Q substituiert ist.

Der durchschnittliche Wert von c liegt bevorzugt zwischen 1,5 und 3, besonders bevorzugt zwischen 1,8 und 2,7.

Der durchschnittliche Wert von d liegt bevorzugt zwischen 0 und 1, besonders bevorzugt zwischen 0 und 0,5.

Beispiele für Verbindungen der Formel (III) sind $PCl_3$=N-$PCl_2O$, $PCl_3$=N-$PCl_2$=N-$PCl_2O$, $PCl_3$=N(-$PCl_2$=N)$_2$-$PCl_2O$, $PCl_3$=N(-$PCl_2$=N)$_3$-$PCl_2O$, $PCl_3$=N(-$PCl_2$=N)$_4$-$PCl_2O$, $PCl_3$=N(-$PCl_2$=N)$_5$-$PCl_2O$, $PCl_3$=N(-$PCl_2$=N)$_6$-$PCl_2O$, $PCl_3$=N-PCl(N=$PCl_3$)-$PCl_2O$ und $PCl_3$=N-P(N=$PCl_3$)$_2$-$PCl_2O$, wobei $PCl_3$=N-$PCl_2O$, $PCl_3$=N-$PCl_2$=N-$PCl_2O$, $PCl_3$=N (-$PCl_2$=N)$_2$-$PCl_2O$, $PCl_3$=N(-$PCl_2$=N)$_3$-$PCl_2O$, $PCl_3$=N(-$PCl_2$=N)$_4$-$PCl_2O$ und $PCl_3$=N(-$PCl_2$=N)$_5$-$PCl_2O$ bevorzugt und $PCl_3$=N-$PCl_2$=N-$PCl_2O$, $PCl_3$=N(-$PCl_2$=N)$_2$-$PCl_2O$ und $PCl_3$=N(-$PCl_2$=N)$_3$-$PCl_2O$ besonders bevorzugt sind.

Beispiele für im erfindungsgemäßen Verfahren eingesetzte Organosiliciumverbindungen der Formel (IV) sind Silane, wie $Me_3SiOMe$, $Me_3SiOEt$, $Me_2Si(OMe)_2$, $Me_2Si(OEt)_2$, $MeSi(OMe)_3$, $Me_2ViSiOMe$, $Me_2OctSiOMe$ und $Me_2EtSiOMe$, sowie Organopolysiloxane, wie $Me_3SiOSiMe_3$, $[Me_2SiO]_3$, $[Me_2SiO]_4$, $[Me_2SiO]_5$, $[Me_2SiO]_6$, $Me_3Si[OSiMe_2]_{10}SiMe_3$, $Me_3Si[OSiMe_2]_{100}OSiMe_3$, $Me_3Si[OSiMe_2]_{150}OSiMe_3$, $Me_2(MeO)Si[OSiMe_2]_{50}OSiMe2(OMe)$, $Me_3SiOSiMe(OMe)OSiMe_3$, $Me_2ViSi[OSiMe_2]_{50}OSiMe_2Vi$, $(Eto)_2MeSi[OSiMe_2]_{100}OSiMe(OEt)_2$, $Me_3Si[OSiMe_2]_{50}[OSiMe(CH_2CH_2CF_3)]_8OSiMe_3$, $Me_3Si[OSiMe_2]_{80}[OSiMeH]_{50}SiMe_3$ und $Me_3Si[OSiMe_2]_{20}[OSiPhMe]_{200}OSiMe_3$, wobei $Me_3SiOSiMe_3$, $[Me_2SiO]_3$, $[Me_2SiO]_4$, $[Me_2SiO]_5$, $Me_3Si[OSiMe_2]_{10}OSiMe_3$, $Me_3Si[OSiMe_2]_{100}OSiMe_3$, $Me_3Si[OSiMe_2]_{80}[OSiMeH]_5OSiMe_3$ und $Me_2(MeO)Si[OSiMe_2]_{50}OSiMe_2(OMe)$ bevorzugt und $[Me_2SiO]_4$, $Me_3Si[OSiMe_2]_{10}OSiMe_3$ sowie $Me_3Si[OSiMe_2]_{100}OSiMe_3$ besonders bevorzugt sind und Me Methylrest, Et Ethylrest, Oct n-Octylrest, Ph Phenylrest und Vi Vinylrest bedeutet.

Unter dem Begriff Organopolysiloxane sollen im Rahmen dieser Erfindung auch oligomere Siloxane verstanden werden.

Handelt es sich bei den erfindungsgemäß eingesetzten Organosiliciumverbindungen aus Einheiten der Formel (IV) um Organopolysiloxane, so sind solche mit einer Viskosität von 0,6 bis 1000 $mm^2/s$ bevorzugt.

Bei dem erfindungsgemäßen Verfahren wird die Organosiliciumverbindung aus Einheiten der Formel (IV) vorzugsweise in Mengen von 20 bis 10000 Gewichtsprozent, besonders bevorzugt 50 bis 5000 Gewichtsprozent, jeweils bezogen auf das Gesamtgewicht an eingesetztem sauerstoffhaltigen Chlorphosphazen der Formel (III), eingesetzt.

Das erfindungsgemäße Verfahren wird vorzugsweise bei einer Temperatur von 20 bis 170°C, besonders bevorzugt von 30 bis 130 °C, und einem Druck von 50 bis 1100 hPa, besonders bevorzugt 900 bis 1100 hPa, durchgeführt.

Das erfindungsgemäße Verfahren kann in Anwesenheit oder Abwesenheit von organischem Lösungsmittel durchgeführt, wobei vorzugsweise kein organisches Lösungsmittel eingesetzt wird.

Handelt es sich bei der erfindungsgemäß eingesetzten Organosiliciumverbindung um ein Organopolysiloxan aus Einheiten der Formel (IV) mit d gleich 0, so sind für die Umsetzungen oft Temperaturen von über 100 °C erforderlich, um eine angemessenne Reaktionsgeschwindigkeit zu erhalten. In diesem Fall erweist sich der Zusatz von organischem Lösungsmittel als vorteilhaft, insbesondere auch dann, wenn noch dazu längerkettige Chlorphosphazene, d.h. Chlorphosphazene der Formel (III) mit $n \geq 3$, eingesetzt werden.

Falls bei dem erfindungsgemäßen Verfahren organische Lösungsmittel eingesetzt werden, handelt es sich vorzugsweise um solche, die gegenüber den sauerstoffhaltigen Chlorphosphazenen der Formel (III), den Organosiliciumverbindungen der Formel (IV) und den erfindungsgemäßen, Organosiliciumreste aufweisenden Phosphazenen inert sind und deren Siedepunkte bei einem Druck von 1 hPa nicht über 120°C liegen, wodurch sie auf relativ einfache Weise wieder destillativ entfernbar sind.

Beispiele für solche organischen Lösungsmittel sind Chlorkohlenwasserstoffe, wie Chloroform, isomere Trichlorethane, Trichlorethen, isomere Tetrachlorethane, Tetrachlorethen und 1,2,3-Trichlorpropan; Ether, wie Dioxan, Tetrahydrofuran, Diethylether und Diethylenglykoldimethylether; Ester, wie Methylacetat, Ethylacetat, n- und iso-Propylacetat, Diethylcarbonat und Ethylformiat; Kohlenwasserstoffe, wie n-Hexan, Hexan-Isomerengemisch, Cyclohexan, Heptan, Octan, Waschbenzin, Petrolether, Benzol, Toluol und Xylole, wobei Kohlenwasserstoffe, insbesondere Toluol und Xylole, und Chlorkohlenwasserstoffe, insbesondere Chloroform, Tri- und Tetrachlorethen und 1,2,3-Trichlorpropan, besonders bevorzugt sind.

Wird Lösungsmittel mitverwendet, so wird vorzugsweise eine Menge von 20 bis 500 Gewichtsprozent, insbesondere von 50 bis 300 Gewichtsprozent, bezogen auf die Gesamtmenge an Chlorphosphazen der Formel (III) und Organosiliciumverbindung aus Einheiten der Formel (IV), eingesetzt.

Bei den einzelnen im erfindungsgemäßen Verfahren eingesetzten Bestandteilen kann es sich jeweils um eine Art derartiger Bestandteile wie auch um ein Gemisch aus mindestens zwei Arten derartiger Bestandteile handeln.

Bevorzugt wird das erfindungsgemäße Verfahren unter Ausschluß von Hydroxylgruppen aufweisenden Stoffen, wie beispielsweise Wasser, Alkohole, Carbonsäuren und Sil(ox)anole durchgeführt.

Bei einer bevorzugten Ausführungsform des erfindungsgemäßen Verfahrens werden sauerstoffhaltiges Chlorphosphazen der Formel (III) und Organosiliciumverbindung aus Einheiten der Formel (IV) durchmischt und intensiv gerührt. Sobald das Reaktionsgemisch homogen ist, wird noch etwa eine Stunde weitergerührt. Wird die Umsetzung in Gegenwart von organischem Lösungsmittel durchgeführt, ist die Reaktion beendet, wenn das Reaktionsgemisch nach Entfernung des organischen Lösungsmittels homogen bleibt.

Die erfindungsgemäßen, Organosiliciumreste aufweisenden sauerstoffhaltigen Chlorphosphazene sind flüssige, ölige oder pastöse Substanzen, wobei die Konsistenz entweder mehr durch die Natur des Chlorphosphazens oder des Organosiliciumrests beeinflußt wird, je nachdem welcher Anteil im Molekül überwiegt.

Das erfindungsgemäße Verfahren hat den Vorteil, daß auf einfache Art und Weise Organosiliciumreste aufweisende sauerstoffhaltige Chlorphosphazene hergestellt werden können.

Des weiteren hat das erfindungsgemäße Verfahren den großen Vorteil, daß die Anbindung der Organosiliciumreste an die Phosphazene mit außerordentlich hoher Selektivität verläuft.

Obwohl die erfindungsgemäß eingesetzten Chlorphosphazene der Formel (III) mehrere Phosphor-Chlor-Gruppen aufweisen, wird nur an dem terminalen, nicht sauerstoffhaltigen Phosphoratom eine SiOP-Bindung geknüpft.

Die Organosiliciumverbindungen aus Einheiten der Formel (IV) sind handelsübliche Verbindungen bzw. können nach in der Silicium-Chemie gängigen Methoden hergestellt werden.

Die sauerstoffhaltigen Chlorphosphazene der Formel (III) können nach bekannten Verfahren synthetisiert werden. Hierzu sei beispielsweise auf M. Bermann: "The Phosphazotrihalides", Advances in Inorganic and Radiochemistry 14 (1972), Academic Press New York, London, insbesondere Seiten 1 bis 30 verwiesen. Des weiteren können sauerstoffhaltige Chlorphosphazene auch durch Umsetzung ionischer Chlorphosphazene mit Hydroxylgruppen aufweisenden Verbindungen hergestellt werden.

Ein weiterer Gegenstand der Erfindung ist ein Verfahren zur Herstellung sauerstoffhaltiger Phosphazene der Formel (III), dadurch gekennzeichnet, daß ionische Phosphazene der Formel

$$[PCl_3{=}N(-PCl_2{=}N)_n-PCl_3]^+\ A \qquad (V),$$

worin

n 0 oder eine ganze Zahl von 1 bis 6, bevorzugt 0 oder eine ganze Zahl von 1 bis 4, besonders bevorzugt eine ganze Zahl von 1 bis 3, bedeutet und

A ein einfach negativ geladenes Ion ist,

mit Hydroxylgruppen aufweisenden Verbindungen umgesetzt werden.

Obwohl durch die Formel (V) nicht ausgedrückt, können die Chloratome teilweise durch Reste Q ersetzt sein, wobei Q die obengenannte Bedeutung hat und diese Verbindungen im folgenden unter der Bezeichnung "Chlorphosphazene" mit umfaßt werden sollen.

Bevorzugt handelt es sich bei den Verbindungen der Formel (V) um solche, in denen kein Chloratom durch einen Rest Q substituiert ist.

A bedeutet vorzugsweise Halogenidion, insbesondere Chlorid, oder Addukt eines Halogenidions an eine Lewissäure der allgemeinen Formel $[M_mD_{m+1}]^-$, wobei m die Valenz bzw. Oxidationsstufe des Zentralelements M wiedergibt und D für ein Halogenatom steht.

Bevorzugt handelt es sich bei A gleich der Formel $[M_mD_{m+1}]^-$ um $BF_4^-$, $BCl_4^-$, $AlCl_4^-$, $FeCl_4^-$, $PF_6^-$, $PCl_6^-$, $SbF_6^-$,

$SbCl_6^-$, $HgI_3^-$, $NbCl_6^-$, $MoCl_6^-$, $TaCl_6^-$, wobei das Hexachlorophosphation besonders bevorzugt ist.

Beispiele für die im erfindungsgemäßen Verfahren eingesetzten ionischen Phosphazene der Formel (V) sind $[PCl_3=N-PCl_3]^+Cl^-$, $[PCl_3=N-PCl_3]^+AlCl_4^-$, $[PCl_3=N-PCl_3]^+BCl_4^-$, $[PCl_3=N-PCl_3]^+FeCl_4^-$, $[PCl_3=N-PCl_3]^+PCl_6^-$, $[PCl_3=N-PCl_3]^+SbCl_6^-$, $[PCl_3=N-PCl_3]^+Br^-$, $[PCl_3=N-PCl_2=N-PCl_3]^+Cl^-$, $[PCl_3=N-PCl_2=N-PCl_3]^+TaCl_6^-$, $[PCl_3=N-PCl_2=N-PCl_3]^+BCl_4^-$, $[PCl3=N-PCl_2=N-PCl_3]^+FeCl_4^-$, $[PCl_3=N-PCl_2=N-PCl_3]^+PCl_6^-$, $[PCl_3=N-PCl_2=N-PCl_3]^+SbCl_6^-$, $[PCl_3=N-PCl_2=N-PCl_3]^+Br^-$, $[PCl_3=N(-PCl_2=N)_2-PCl_3]^+Cl^-$, $[PCl_3=N(-PCl_2=N)_2-PCl_3]^+AlCl_4^-$, $[PCl_3=N(-PCl_2=N)_2-PCl_3]^+BCl_4^-$, $[PCl_3=N(-PCl_2=N)_2-PCl_3]^+MoCl_6^-$, $[PCl_3=N(-PCl_2=N)_2-PCl_3]^+PCl_6^-$, $[PCl_3=N(-PCl_2=N)_2-PCl_3]^+SbCl_6^-$, $[PCl_3=N(-PCl_2=N)_2-PCl_3]^+Br^-$, $[PCl_3=N(-PCl_2=N)_3-PCl_3]^+Cl^-$, $[PCl_3=N(-PCl_2=N)_3-PCl_3]^+PCl_6^-$, $[PCl_3=N(-PCl_2=N)_3-PCl_3]^+SbCl_6^-$, $[PCl_3=N(-PCl_2=N)_3-PCl_3]^+NbCl_6^-$, $[PCl_3=N(-PCl_2=N)_4-PCl_3]^+PCl_6^-$, $[PCl_3=N(-PCl_2=N)_4-PCl_3]^+Cl^-$, $[PCl_3=N(-PCl_2=N)_5-PCl_3]^+PCl_6^-$, $[PCl_3=N(-PCl_2=N)_5-PCl_3]^+BCl_4^-$, $[PCl_3=N(-PCl_2=N)_6-PCl_3]^+PCl_6^-$ und $[PCl_3=N(-PCl_2=N)_6-PCl_3]^+TaCl_6^-$ sowie $[PCl_3=N-PCl(N=PCl_3)=N-PCl_3]^+Cl^-$, $[PCl_3=N-PCl(N=PCl_3)=N-PCl_3]^+PCl_6^-$, $[PCl_3=N-P(N=PCl_3)_2=N-PCl_3]^+Cl^-$ und $[PCl_3=N-P(N=PCl_3)_2=N-PCl_3]^+HgI_3^-$, wobei $[PCl_3=N-PC=N-PCl_3]^+Cl^-$, $[PCl_3=N-PCl_3]+PCl_6^-$, $[PCl_3=N-PCl_2=N-PCl_3]^+Cl^-$, $[PCl_3=N-PCl_2=N-PCl_3]^+PCl_6^-$, $[PCl_3=N-PCl_2=N-PCl_3]^+SbCl_6^-$, $[PCl_3=N(-PCl_2=N)_2-PCl_3]^+Cl^-$, $[PCl_3=N(-PCl_2=N)_2-PCl_3]^+PCl_6^-$, $[PCl_3=N(-PCl_2=N)_2-PCl_3]^+SbCl_6^-$, $[PCl_3=N(-PCl_2=N)_3-PCl_3]^+Cl^-$, $[PCl_3=N(-PCl_2=N)_3-PCl_3]^+PCl_6^-$, $[PCl_3=N(-PCl_2=N)_4-PCl_3]^+Cl^-$ und $[PCl_3=N(-PCl_2=N)_4-PCl_3]^+PCl_6^-$ bevorzugt und $[PCl_3=N-PC=_3]^+PCl_6^-$, $[PCl_3=N-PCl_2=N-PCl_3]^+PCl_6^-$, $[PCl_3=N(-PCl_2=N)_2-PCl_3]^+PCl_6^-$ sowie $[PCl_3=N(-PCl_2=N)_3-PCl_3]^+PCl_6^-$ besonders bevorzugt eingesetzt werden.

Die Herstellung der ionischen Phosphazene der Formel (V) ist bereits bekannt. Hierzu sei beispielsweise auf M. Bermann: "The Phosphazotrihalides", Advances in Inorganic and Radiochemistry 14 (1972), Academic Press New York, London, insbesondere Seiten 1 bis 30 verwiesen.

Lineare Verbindungen $[PCl_3=N(-PCl_2=N)_n-PCl_3]^+PCl_6^-$ können beispielsweise sehr einfach durch Umsetzung von Phosphorpentachlorid mit Ammoniumchlorid oder cyclischen Dichlorphosphazenen, wie $(PNCl_2)_3$ oder $(PNCl_2)_4$ dargestellt werden. Durch Erhitzen lassen sich die Verbindungen unter Abgabe von

Phosphorpentachlorid in die entsprechenden Chloride $[PCl_3=N(-PCl_2=N)_n-PCl_3]^+Cl^-$ überführen. Diese wiederum reagieren mit Halogenverbindungen der allgemeinen Formel $[M_mD_m]$, in der M, D und m die oben angegebene Bedeutung haben, zu Verbindungen der Formel

$$[PCl_3=N(-PCl_2=N)_n-PCl_3]^+[M_mD_{m+1}]^-.$$

Als Hydroxylgruppen enthaltende Verbindungen können bei dem erfindungsgemäßen Verfahren zur Herstellung von sauerstoffhaltigen Chlorphosphazenen sowohl organische als auch anorganische Verbindungen eingesetzt werden.

Bevorzugt handelt es sich bei den Hydroxylgruppen aufweisenden Verbindungen um Wasser, Alkohole, Carbonsäuren, Phosphor-und Phosphonsäuren sowie deren Monoester, Sulfonsäuren, Silanole sowie Organopolysiloxane mit Si-gebundenen Hydroxylgruppen, wobei Wasser, Alkohole mit 1 bis 6 Kohlenstoffatomen, wie Methanol, Ethanol, Isopropanol, 1-Butanol, 1-Pentanol und Cyclohexanol, Carbonsäuren, wie Ameisensäure und Essigsäure, Silanole, wie Trimethylsilanol und Triphenylsilanol, sowie Hydroxylgruppen aufweisende Organopolysiloxane, wie Pentamethyldisiloxanol, besonders bevorzugt sind.

Das molare Einsatzverhältnis von ionischem Chlorphosphazen der Formel (V) und Hydroxylgruppen aufweisender Verbindung hängt von der Art des Anions A in Formel (V) ab. Ist das Anion A unter den gewählten Reaktionsbedingungen unreaktiv gegenüber der Hydroxylgruppen aufweisenden Verbindung, wie dies zum Beispiel bei Verbindungen mit einem einfachen Halogenid als A der Fall ist, so wird mit einem Mol einer eine Hydroxylgruppe enthaltenden Verbindung pro Mol ionischem Chlorphosphazen der Formel (V) ein sauerstoffhaltiges Chlorphosphazen der Formel (III) erhalten.

Ist das Anion A unter den gewählten Reaktionsbedingungen hingegen reaktiv gegenüber der Hydroxylgruppen aufweisenden Verbindung, wie dies zum Beispiel bei $PCl_6^-$ als A der Fall ist, so ist dies bei der Wahl des Einsatzverhältnisses mit zu berücksichtigen. Beispielsweise wird mit 2 Mol eine Hydroxylgruppe aufweisender Verbindung und 1 Mol Phosphazen der Formel (V) mit A gleich $PCl_6^-$ ein sauerstoffhaltiges Phosphazen der Formel (III) erhalten.

Das erfindungsgemäße Verfahren zur Herstellung von sauerstoffhaltigen Phosphazenen kann in Anwesenheit oder Abwesenheit von organischem Lösungsmittel durchgeführt werden, wobei vorzugsweise organisches Lösungsmittel eingesetzt wird.

Werden organische Lösungsmittel eingesetzt, handelt es sich vorzugsweise um solche, in denen sich die erfindungsgemäßen, sauerstoffhaltigen Phosphazene lösen und die frei von Hydroxylgruppen sind. Das eingesetzte organische Lösungsmittel sorgt in erster Linie für eine gute Verteilung der Hydroxylgruppen enthaltenden Verbindungen, sei es daß sie gelöst oder nur dispergiert sind, und ermöglicht eine effiziente Abfuhr der Reaktionswärme, was für die Selektivität der erfindungsgemäßen Umsetzungen von Bedeutung ist.

Falls bei dem erfindungsgemäßen Verfahren organisches Lösungsmittel eingesetzt wird, geschieht dies vorzugsweise in Mengen von 50 bis 1000 Gewichtsprozent, besonders bevorzugt 100 bis 500 Gewichtsprozent, jeweils bezogen auf das Gewicht an ionischem Chlorphosphazen der Formel (V).

Beispiele für organische Lösungsmittel, die bei den erfindungsgemäßen Verfahren zur Herstellung von sauerstoffhaltigen Phosphazenen eingesetzt werden können, sind im wesentlichen solche, die bei dem Druck der umgebenden Atmosphäre bei einer Temperatur ab 0 °C flüssig sind und deren Siedepunkt bei einem Druck von etwa 100 Pa nicht über 150 °C liegt, wodurch sie destillativ ohne allzu große thermische Belastung der Produkte wieder entfernbar sind, und die weitgehend resistent sind gegenüber Chlorwasserstoff und Phosphor-Chlor-Gruppen, wie etwa aliphatische und aromatische Kohlenwasserstoffe Chlorkohlenwasserstoffe, Ester, Ether oder Säureamide sowie Gemische dieser Lösungsmittel.

Bei den organischen Lösungsmitteln, die bei dem erfindungsgemäßen Verfahren zur Herstellung von sauerstoffhaltigen Chlorphosphazenen eingesetzt werden können, handelt es sich bevorzugt um aliphatische und aromatische Kohlenwasserstoffe und Chlorkohlenwasserstoffe, wobei n-Hexan, Cyclohexan, Toluol, Xylol und Chloroform besonders bevorzugt sind.

Das erfindungsgemäße Verfahren zur Herstellung von sauerstoffhaltigen Phosphazenen wird vorzugsweise bei einer Temperatur von 0 bis 120 °C, besonders bevorzugt 20 bis 70 °C, und einem Druck zwischen 900 und 1100 hPa durchgeführt. Eine Durchführung bei höheren oder niedrigeren Drücken ist jedoch ebenfalls möglich.

Bei den einzelnen im erfindungsgemäßen Verfahren eingesetzten Bestandteilen kann es sich jeweils um eine Art derartiger Bestandteile wie auch um ein Gemisch aus mindestens zwei Arten derartiger Bestandteile handeln.

Nach einer bevorzugten Ausführungsform des erfindungsgemäßen Verfahrens wird mindestens ein ionisches Phosphazen der Formel (V) mit organischem Lösungsmittel, welches frei von Hydroxylgruppen ist, versetzt und nach Einstellung der gewünschten Reaktionstemperatur mindestens eine hydroxyfunktionelle Verbindung gegebenenfalls im Gemisch mit organischem Lösungsmittel in einer solchen Geschwindigkeit zudosiert, daß die Reaktionstemperatur bei der exothermen Umsetzung im vorgegebenen Bereich bleibt. Das Ende der Umsetzung zeigt sich daran, daß die Entwicklung von Chlorwasserstoff aufhört und keine Wärmetönung mehr auftritt.

Falls bei dem erfindungsgemäßen Verfahren organisches Lösungsmittel eingesetzt wird, in dem die hydroxyfunktionelle Verbindung unlöslich, das erfindungsgemäße, sauerstoffhaltige Chlorphosphazen jedoch löslich ist, kann das Ende der Umsetzung auch einfach am Verschwinden der Hydroxylgruppen aufweisenden Verbindung erkannt werden.

Nach Beendigung des erfindungsgemäßen Verfahrens können die so erhaltenen sauerstoffhaltigen Chlorphosphazene der allgemeinen Formel (III) auf an sich bekannte Art und Weise isoliert werden, wobei abhängig von der Art der eingesetzten Ausgangsverbindungen, ionischen Phosphazen der Formel (V) sowie hydroxyfunktioneller Verbindung, verschiedene Isoliermethoden, wie beispielsweise Destillation oder Extraktion, angewendet werden. Vorzugsweise werden die erfindungsgemäß hergestellten, sauerstoffhaltigen Chlorphosphazene dadurch isoliert, daß alle anderen Bestandteile des Reaktionsgemisches destillativ, gegebenenfalls unter reduziertem Druck, entfernt werden.

Das erfindungsgemäße Verfahren hat den Vorteil, daß sauerstoffhaltige Chlorphosphazene auf einfache Art und Weise hergestellt werden können. Ein weiterer Vorteil ist die hohe Selektivität der erfindungsgemäßen Umsetzung, was zu praktisch quantitativen Ausbeuten führt. Die Selektivität ist so groß, daß durch Wahl entsprechender Einsatzverhältnisse der Ausgangsstoffe ganz gezielt und reproduzierbar sauerstoffhaltige Chlorphosphazene der Formel (III) herstellbar sind. So wird der Sauerstoff reproduzierbar an immer die selbe Position im Phosphazenmolekül gebunden, wenngleich in jedem Fall mehrere Phosphor-Chlor-Gruppen präsent sind.

Die erfindungsgemäßen, Organosiliciumreste aufweisenden sauerstoffhaltigen Chlorphosphazene können für alle Zwecke eingesetzt werden, für die auch bisher Phosphazene eingesetzt werden.

Ein weiterer Gegenstand der Erfindung ist ein Verfahren zum Kondensieren und/oder Äquilibrieren von Organosiliciumverbindungen in Gegenwart von Organosiliciumreste aufweisenden sauerstoffhaltigen Phosphazenen gemäß Formel (I).

Bei den im erfindungsgemäßen Verfahren eingesetzten Organosiliciumreste aufweisenden sauerstoffhaltigen Phosphazenen handelt es sich bevorzugt um Verbindungen der Formel

$$Cl[Me_2SiO]_kPCl_2{=}N({-}PCl_2{=}N)_1{-}PCl_2O$$

mit k gleich einer Zahl von 2 bis 400, 1 einer Zahl von 1 bis 3 und Me gleich Methylrest.

Die angewendeten Mengen an erfindungsgemäß eingesetzten, Organosiliciumreste aufweisenden sauerstoffhaltigen Phosphazenen können im Rahmen des erfindungsgemäßen Verfahrens die gleichen sein, wie bei den bisher bekannten Verfahren zur Herstellung von Organosiliciumverbindungen durch Kondensation und/oder Äquilibrierung. Aufgrund der hohen Wirksamkeit der erfindungsgemäß eingesetzten, Organosiliciumreste aufweisenden sauerstoffhaltigen Phosphazene sind im allgemeinen jedoch niedrigere Mengen als bei den bisher bekannten Verfahren völlig ausreichend.

Vorzugsweise werden die als Katalysator zur Förderung von Kondensations- und/oder Äquilibrierungsreaktionen

von Organosiliciumverbindungen wirksamen, Organosiliciumreste aufweisenden sauerstoffhaltigen Phosphazene in Mengen von 0,1 bis 1000 Gew.-ppm (Gewichtsteilen je Million Gewichtsteilen), besonders bevorzugt 1 bis 300 Gew.-ppm, bezogen auf das Gesamtgewicht der zu kondensierenden und/oder zu äquilibrierenden Organosiliciumverbindungen, eingesetzt.

Bei dem erfindungsgemäßen Verfahren werden die Organosiliciumreste aufweisenden sauerstoffhaltigen Chlorphosphazene vorzugsweise als Reinsubstanzen eingesetzt.

Sie können aber auch - falls erwünscht - im Gemisch mit Stoffen, die mit den Organosiliciumreste aufweisenden sauerstoffhaltigen Chlorphosphazenen nicht oder zumindest nicht innerhalb kurzer Zeit, d.h. einigen Stunden, in einer Weise reagieren, daß deren die Kondensation und/oder Äquilibrierung von Organosiliciumverbindung beschleunigende Wirkung nennenswert herabgesetzt wird, eingesetzt werden. Beispiele hierfür sind organische Lösungsmittel.

Bei dem erfindungsgemäßen Verfahren können als Organosiliciumverbindung beliebige Organosiliciumverbindungen eingesetzt werden, die auch bisher in Gegenwart von Katalysatoren auf Phosphazenbasis kondensiert und/oder äquilibriert werden konnten.

Kondensationsreaktionen von Organosiliciumverbindungen sind insbesondere die Reaktionen von zwei Si-gebundenen Hydroxylgruppen unter Austritt von Wasser, ferner beispielsweise die Reaktion einer Si-gebundenen Hydroxylgruppe mit einer Si-gebundenen Alkoxygruppe unter Austritt von Alkohol oder mit Si-gebundenem Halogen unter Austritt von Halogenwasserstoff.

Unter Äquilibrierungsreaktionen werden die Umlagerungen von Siloxanbindungen von Siloxaneinheiten verstanden.

Kondensations- und Äquilibrierungsreaktionen verlaufen häufig gleichzeitig.

Organosiliciumverbindungen, die in dem erfindungsgemäßen Verfahren eingesetzt werden können, sind allgemein bekannt und werden häufig durch die allgemeinen Formeln

$$E(SiR^4{}_2O)_eSiR^4{}_2E \qquad (VII)$$

und

$$(SiR^4{}_2O)_f \qquad (VIII)$$

wiedergegeben, wobei

- $R^4$ gleich oder verschieden sein kann und Wasserstoffatom oder einwertige, gegebenenfalls substituierte Kohlenwasserstoffreste bedeutet,
- E gleich oder verschieden sein kann und Hydroxylgruppe, Rest $-OR^5$ mit $R^5$ gleich einwertigem organischen Rest, $-OSiR^4{}_3$ mit $R^4$ gleich der vorstehenden Bedeutung oder Halogenatom bedeutet,
- e 0 oder eine ganze Zahl von mindestens 1, bevorzugt 2 bis 1000, besonders bevorzugt 2 bis 500, und
- f eine ganze Zahl im Wert von 3 bis 12, bevorzugt 4 bis 8, besonders bevorzugt 4, ist.

Obwohl durch die häufig verwendeten Formeln nicht dargestellt, können bis zu 5 Molprozent der Diorganosiloxaneinheiten durch andere Siloxaneinheiten, wie $R^4SiO_{3/2}$- und/oder $SiO_{4/2}$-Einheiten, ersetzt sein, wobei $R^4$ die vorstehend dafür angegebene Bedeutung hat.

Bevorzugt handelt es sich bei Rest $R^4$ um Wasserstoffatom und Kohlenwasserstoffreste mit 1 bis 18 Kohlenstoffatomen, wobei Kohlenwasserstoffreste mit 1 bis 4 Kohlenstoffatomen, insbesondere der Methylrest, besonders bevorzugt sind.

Beispiele für Reste $R^4$ sind die für R oben angegebenen Beispiele sowie der n-Octadecylrest, Anthryl- und Phenanthrylrest.

Beispiele für einwertige, substituierte Kohlenwasserstoffreste $R^4$ sind die oben für Rest R angegebenen substituierten Kohlenwasserstoffreste.

Bei Rest $R^5$ handelt es sich bevorzugt um Alkylreste mit 1 bis 4 Kohlenstoffatomen, besonders bevorzugt um den Methyl-und den Ethylrest.

Die Viskosität der bei dem erfindungsgemäßen Verfahren eingesetzten Organosiliciumverbindungen der Formel (VII) liegt vorzugsweise zwischen 0,6 und $10^6$ $mm^2/s$ bei einer Temperatur von 25°C, besonders bevorzugt zwischen 10 und $10^4$ $mm^2/s$.

Beispiele für Verbindungen der Formel (VII) sind $\alpha,\omega$-Dihydroxydimethylpolysiloxan mit einer Viskosität von 80 $mm^2/s$ bei 25 °C, $\alpha,\omega$-Dihydroxydimethylpolysiloxan mit einer Viskosität von 20 000 $mm^2/s$ bei 25 °C, $\alpha,\omega$-Dichlorodi-

methylpolysiloxan mit einer Viskosität von 40 $mm^2/s$ bei 25 °C, α,ω-Bis(trimethylsiloxy)polymethylhydrogensiloxan mit einer Viskosität von 25 $mm^2/s$ bei 25 °C, α,ω-Bis(trimethylsiloxy)polydimethylsiloxan mit einer Viskosität von 20 $mm^2/s$ bei 25 °C, Hexamethyldisiloxan und 1,3-Divinyl-1,1,3,3-tetramethyldisiloxan.

Beispiele für Verbindungen der Formel (VIII) sind Hexamethylcyclotrisiloxan, Octamethylcyclotetrasiloxan und Decamethylcyclopentasiloxan.

Hat in Formel (VII) E die Bedeutung von $-OSiR^4_3$ mit $R^4$ gleich der obengenannten Bedeutung, so handelt es sich um Organosiliciumverbindungen, welche die Kettenlänge regeln.

Des weiteren können bei dem erfindungsgemäßen Verfahren beliebige, die Kettenlänge regelnde Organosiliciumverbindungen eingesetzt werden, die auch bei den bisher bekannten Verfahren zum Kondensieren und/oder Äquilibrieren in Gegenwart eines Katalysators auf Phosphazenbasis mitverwendet werden konnten.

Vorzugsweise handelt es sich bei derartigen, die Kettenlänge regelnden Organosiliciumverbindungen neben den Verbindungen der Formel (VII) mit E gleich $-OSiR^4_3$ um solche der Formel

$$R^6_3SiG \qquad (IX),$$

worin

$R^6$ gleich oder verschieden sein kann und eine für $R^4$ angegebene Bedeutung hat und
G Hydroxylgruppe, Rest $-OR^5$ mit $R^5$ gleich einwertigem organischen Rest oder Halogenatom bedeutet.

Beispiele für Rest $R^6$ sind die für $R^4$ gleich organischem Rest angegebenen Beispiele.

Bei G handelt es sich vorzugsweise um Hydroxylgruppe, Chloratom, Methoxyrest und Ethoxyrest.

Beispiele für Verbindungen der Formel (IX) sind Trimethylchlorsilan und Trimethylmethoxysilan.

Die Menge an eingesetzter, die Kettenlänge regelnder Organosiliciumverbindung richtet sich nach der gewünschten Höhe des Molekulargewichts der durch Kondensation und/oder Äquilibrierung hergestellten Organopolysiloxane und ist bereits bekannt.

Die erfindungsgemäß eingesetzten Organosiliciumverbindungen sind handelsübliche Produkte bzw. nach in der Silicon-Chemie üblichen Verfahren herstellbar.

Bei den einzelnen im erfindungsgemäßen Verfahren eingesetzten Bestandteilen kann es sich jeweils um eine Art derartiger Bestandteile wie auch um ein Gemisch aus mindestens zwei Arten derartiger Bestandteile handeln.

Die angewendeten Temperaturen und Drücke können im erfindungsgemäßen Verfahren ebenfalls die gleichen sein wie bei den bisher bekannten Verfahren zum Kondensieren und/oder Äquilibrieren von Organosiliciumverbindungen.

Die Kondensations- und/oder Äquilibrierungsreaktionen werden vorzugsweise bei 50 bis 200°C, besonders bevorzugt 80 bis 160°C, durchgeführt.

Die Kondensations- und/oder Äquilibrierungsreaktionen können bei einem Druck der umgebenden Atmosphäre, also 900 bis 1100 hPa, durchgeführt werden. Um die Abführung der bei der Kondensation gebildeten Spaltprodukte, wie beispielsweise Wasser, HCl oder Alkohol, zu erleichtern, wird das Kondensieren und/oder Äquilibrieren der Organosiliciumverbindungen vorzugsweise bei einem Druck unterhalb 80 kPa durchgeführt. Das Kondensieren, insbesondere aber das Äquilibrieren, ist aber auch bei höheren Drücken durchführbar.

Das erfindungsgemäße Verfahren kann sowohl absatzweise als auch kontinuierlich durchgeführt werden.

Nach Erreichen der gewünschten Viskosität kann die Viskosität der im Rahmen des erfindungsgemäßen Verfahrens erhaltenen Organosiliciumverbindung konstant gehalten werden, indem der erfindungsgemäß verwendete Katalysator bzw. ein Umsetzungsprodukt, welches aus diesem Katalysator durch Umsetzung mit zu kondensierender und/oder zu äquilibrierender Organosiliciumverbindung gebildet wurde und ebenfalls das Kondensieren und/oder Äquilibrieren von Organosiliciumverbindungen fördert, durch Zugabe von Inhibitoren bzw. Desaktivatoren, die auch bisher im Zusammenhang mit Phosphazenen eingesetzt wurden, wie z.B. Triisononylamin, n-Butyllithium, Lithiumsiloxanolat, Hexamethyldisilazan und Magnesiumoxid, inhibiert bzw. desaktiviert wird.

Um eine gute Verteilung der bei dem erfindungsgemäßen Verfahren eingesetzten Komponenten ineinander zu gewährleisten, wird vorzugsweise das Gemisch dieser Stoffe während der Durchführung des erfindungsgemäßen Verfahrens bewegt.

Die erfindungsgemäß hergestellten Organopolysiloxane, insbesondere lineare Organopolysiloxane, können für alle Zwecke verwendet werden, bei denen auch die nach bisher bekannten Verfahren durch Kondensieren und/oder Äquilibrieren von Organosiliciumverbindungen erzeugten linearen Organopolysiloxane eingesetzt werden konnten, wie z.B. für Pflegemittel und kosmetische Rezepturen, als Fadengleitmittel, zur Herstellung von Organopolysiloxanelastomeren, wobei die Vernetzung je nach Art der endständigen Einheiten der linearen Organopolysiloxane durch

Kondensation, Anlagerung von Si-gebundenem Wasserstoff an z.B. SiC-gebundene Vinylgruppen oder durch Radikalbildung erfolgen kann, und zur Herstellung von klebrige Stoffe abweisenden Überzügen.

Das erfindungsgemäße Verfahren hat den Vorteil, daß es einfach in der Durchführung ist und hohe Ausbeuten erzielt werden.

Die erfindungsgemäß eingesetzten, die Kondensations- und Äquilibrierungsprozesse fördernden, Organosiliciumreste aufweisenden sauerstoffhaltigen Chlorphosphazene zeigen eine hohe Aktivität. Des weiteren haben die erfindungsgemäß eingesetzten, Organosiliciumreste aufweisenden sauerstoffhaltigen Chlorphosphazene den Vorteil, daß sie sehr gut als Reinsubstanz ohne Zusatz von organischem Lösungsmittel eingesetzt werden können, wobei auch bei kleinen Einsatzmengen eine einfache und exakte Dosierung möglich ist.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

In Anlehnung an die oben bereits zitierte DE 22 29 514 B werden durch Umsetzung von Phosphorpentachlorid mit Ammoniumchlorid im Verhältnis $PCl_5$ : $NH_4Cl$ im Bereich von 3:1 bis 1,5:1 folgende Produkte bzw. Produktgemische erhalten:

Phosphazen A: $[PCl_3{=}N{-}PCl_3]^+[PCl_6]^-$
Phosphazen B: $[PCl_3{=}N{-}PCl_2{=}N{-}PCl_3]^+[PCl_6]^-$
Phosphazen C: Gemisch aus 5 % $[PCl_3{=}N{-}PCl_2{=}N{-}PCl_3]^+[PCl_6]^-$ und 95 % $[PCl_3{=}N({-}PCl_2{=}N)_2{-}PCl_3]^+[PCl_6]^-$
Phosphazen D: Gemisch aus 15 % $[PCl_3{=}N({-}PCl_2{=}N)_2{-}PCl_3]^+[PCl_6]^-$ und 85 % $[PCl_3{=}N({-}PCl_2{=}N)_3{-}PCl_3]^+[PCl_6]^-$.

Im Folgenden bedeutet Me gleich Methylrest.

**Beispiel 1**

In einem Kolben mit Rührer und Gasauslaß werden unter Ausschluß von Feuchtigkeit 64,82 g (0,1 mol) Phosphazen B in 100 ml Toluol dispergiert. Unter Rühren werden zu dieser Mischung bei Raumtemperatur 3,6 g (0,2 mol) entionisiertes Wasser so langsam zudosiert, daß die Temperatur der Mischung infolge der exothermen Reaktion nicht über 40 °C steigt. Die Reaktion ist beendet, wenn die Reaktionsmischung homogen ist und kein HCl-Gas mehr entweicht. Bei 30 °C und 100 Pa werden die flüchtigen Bestandteile entfernt. Zurück bleiben 38,2 g eines ockerfarbenen Öls, aus dem sich bei 0 °C nach kurzer Zeit farblose Kristalle ausscheiden. Nach 2 Stunden ist die gesamte Substanz zu einem leicht gelblichen, wachsartigen Feststoff erstarrt. Ausbeute: 32,7 g $PCl_3{=}N{-}PCl_2{=}N{-}PCl_2O$ Schmelzpunkt: 34 °C.

**Beispiel 2**

In einem Kolben mit Rührer, Gasauslaß und Rückflußkühler werden 75,83 g Phosphazen-Gemisch C in 200 ml n-Hexan dispergiert. Unter heftigem Rühren werden zu dieser Mischung bei der Siedetemperatur des Hexans portionsweise 9,21 g (0,2 mol) wasserfreies Ethanol zugegeben. Die Reaktion ist beendet, wenn kein HCl-Gas mehr entweicht. Das zweiphasige Reaktionsgemisch wird bei 30°C und 100 Pa von allen flüchtigen Bestandteilen befreit. Zurück bleibt ein klares, braunes Öl. Ausbeute: 47,7 g eines Gemisches aus $PCl_3{=}N{-}PCl_2{=}N{-}PCl_2O$ (5 %) und $PCl_3{=}N({-}PCl_2{=}N)_2{-}PCl_2O$ (95 %).

**Beispiel 4**

In einem Kolben mit Gasauslaß werden bei Raumtemperatur 3,6 g (0,2 mol) entionisiertes Wasser unter Rühren zu einer Dispersion von 86,3 g Phosphazen D in 100 ml Toluol getropft. Die Geschwindigkeit der Wasserzugabe wird dabei so eingestellt, daß die Temperatur der Mischung infolge der exothermen Reaktion nicht über 40 °C steigt. Die Reaktion ist beendet, wenn kein HCl-Gas mehr entweicht. Bei 40 °C und 200 Pa werden die flüchtigen Bestandteile entfernt. Zurück bleibt eine gelbbraune Flüssigkeit. Ausbeute: 57,1 g eines Gemisches aus $PCl_3{=}N({-}PCl_2{=}N)_2{-}PCl_2O$ (15 %) und $PCl_3{=}N({-}PCl_2{=}N)_3{-}PCl_2O$ (85 %).

**Beispiel 5**

Über 100 g (0,188 mol) kristallines Phosphazen A wird eine Stunde lang ein $SO_2$-Gasstrom (ca. 0,5 1/Minute)

geleitet. Nach Entfernen der flüchtigen Bestandteile bei 50°C und 100 Pa wird ein hellgelbes öl erhalten, das bei Raumtemperatur zu einem leicht gelblichen, wachsartigen Feststoff erstarrt. Ausbeute: 49,6 g $PCl_3=N\text{-}PCl_2O$.

In einem Kolben mit Rührer und Hahn werden unter gleichzeitiger Spülung mit einem $N_2$-Strom 20 g (74,3 mmol) des oben beschriebenen $PCl_3=N\text{-}PCl_2O$ und 50 g α,ω-Bis(trimethylsiloxy)polydimethylsiloxan einer Viskosität von 350 $mm^2s^{-1}$ 2 Stunden bei 100 °C gerührt. Anschließend wird auf Raumtemperatur abgekühlt. Das Produkt, eine farblose, ölige Flüssigkeit der Viskosität 10 $mm^2s^{-1}$, besitzt folgende durchschnittliche Zusammensetzung:

$$(ClMe_2SiO_{1/2})(Me_3SiO_{1/2})_{0,07}(Me_2SiO)_8PCl_2=N\text{-}PCl_2O.$$

**Beispiel 6**

10 g (26 mmol) $PCl_3=N\text{-}PCl_2=N\text{-}PCl_2O$, dessen Herstellung in Beispiel 1 beschrieben ist, werden unter sorgfältigem Feuchtigkeitsausschluß mit 195 g α,ω-Bis(trimethylsiloxy)polydimethylsiloxan einer Viskosität von 200 $mm^2s^{-1}$ 3 h bei 120 °C gerührt. Dabei wird ein farbloses, klares öl (Viskosität: 195 $mm^2s^{-1}$) erhalten, das folgende durchschnittliche Zusammensetzung aufweist:

$$(ClMe_2SiO_{1/2})\ (Me_3SiO_{1/2})\ (Me_2SiO)_{96}PCl_2=N\text{-}PCl_2=N\text{-}PCl_2O.$$

**Beispiel 7**

40 g (103,9 mmol) $PCl_3=N\text{-}PCl_2=N\text{-}PCl_2O$, dessen Herstellung in Beispiel 1 beschrieben ist, werden unter sorgfältigem Feuchtigkeitsausschluß mit 120 g (404,6 mmol) Octamethylcyclotetrasiloxan 3 Stunden bei 130°C gerührt. Bereits nach ca. einer Stunde ist das anfangs inhomogene Reaktionsgemisch völlig klar und bleibt am Ende der Umsetzung auch nach Abkühlung auf Raumtemperatur klar. Die farblose Flüssigkeit (Viskosität: 12 $mm^2s^{-1}$) hat die durchschnittliche Zusammensetzung

$$(ClMe_2SiO_{1/2})(Me_2SiO)_{14,5}PCl_2=N\text{-}PCl_2=N\text{-}PCl_2O.$$

**Beispiel 8**

40 g eines Gemisches aus $PCl_3=N\text{-}PCl_2=N\text{-}PCl_2O$ (5 %) und $PCl_3=N(\text{-}PCl_2=N)_2\text{-}PCl_2O$ (95 %), dessen Herstellung in Beispiel-2 beschrieben ist, werden unter sorgfältigem Feuchtigkeitsausschluß mit 120 g (404,6 mmol) Octamethylcyclotetrasiloxan 3 Stunden bei 130°C gerührt. Bereits nach ca. einer Stunde ist das anfangs inhomogene Reaktionsgemisch völlig klar und bleibt am Ende der Umsetzung auch nach Abkühlung auf Raumtemperatur klar. Als Produkt wird eine klare, leicht gelbliche Flüssigkeit mit einer Viskosität von 15 $mm^2s^{-1}$ erhalten, die folgende durchschnittliche Zusammensetzung besitzt:

$$(ClMe_2SiO_{1/2})(Me_2SiO)_{19}PCl_2=N(\text{-}PCl_2=N)_{1,95}\text{-}PCl_2O.$$

**Beispiel 9**

5 g eines Gemisches aus $PCl_3=N(\text{-}PCl_2=N)_2\text{-}PCl_2O$ (15 %) und $PCl_3=N(\text{-}PCl_2=N)_3\text{-}PCl_2O$ (85 %), dessen Herstellung in Beispiel 4 beschrieben ist, werden bei 110 °C 4 Stunden mit 195 g (657,5 mmol) Octamethylcyclotetrasiloxan gerührt. Als Produkt wird ein leicht trübes, farbloses Öl der Viskosität 1850 $mm^2s^{-1}$ erhalten. Es hat die durchschnittliche Zusammensetzung:

$$(ClMe_2SiO_{1/2})(Me_2SiO)_{314,3}PCl_2=N(\text{-}PCl_2=N)_{2,85}\text{-}PCl_2O.$$

**Beispiel 10**

In einem Kolben mit Rührer werden 1425 g α,ω-Dihydroxypolydimethylsiloxan einer Viskosität von ca. 80 $mm^2s^{-1}$ und 75 g α,ω-Bis(trimethylsiloxy)polydinethylsiloxan einer Viskosität von ca. 20 $mm^2s^{-1}$ auf 150 °C erhitzt und unter Rühren mit 0,2 g des in Beispiel 6 hergestellten Katalysators der durchschnittlichen Zusammensetzung $(ClMe_2SiO_{1/2})$

$(Me_3SiO_{1/2})(Me_2SiO)_{96}PCl_2=N-PCl_2=N-PCl_2O$ versetzt. Nach Zugabe des Katalysators wird der Druck im Reaktionsgefäß auf ca. 100 Pa erniedrigt und die Reaktionsmischung noch 10 Minuten bei 150 °C gerührt. Anschließend wird der Druck wieder auf den Wert der Umgebungsluft erhöht und zur Desaktivierung des Katalysators 0,6 g einer basischen Siloxanmischung zugesetzt, die durch Umsetzung von 5 g n-Butyllithium mit 250 g α,ω-Bis(trimethylsiloxy)polydimethylsiloxan einer Viskosität von 350 $mm^2s^{-1}$ hergestellt worden ist. Als Produkt wird ein α,ω-Bis(trimethylsiloxy) polydimethylsiloxan einer Viskosität von 4000 $mm^2s^{-1}$ erhalten. Es ist glasklar, farb- und geruchlos, und verändert seine Eigenschaften auch bei mehrtägiger Lagerung bei ca. 200 °C nicht.

**Beispiel 11**

In einem Kolben mit Rührer werden 960 g α,ω-Bis(trimethylsiloxy)polymethylhydrogensiloxan einer Viskosität von 25 $mm^2/s$ und 400 g α,ω-Bis(trimethylsiloxy)polydimethylsiloxan einer Viskosität von 350 $mm^2s^{-1}$ bei 120 °C mit 0,11 g des in Beispiel 8 hergestellten Katalysators der durchschnittlichen Zusammensetzung $(ClMe_2SiO_{1/2})(Me_2SiO)_{19}PCl_2=N(-PCl_2=N)_{1,95}-PCl_2O$ versetzt und bei dieser Temperatur 10 Minuten gerührt. Nach Abkühlung auf Raumtemperatur werden zur Desaktivierung des Katalysators 2 g Magnesiumoxid in die Reaktionsmischung eingerührt, anschließend wird filtriert. Das Produkt ist ein farbloses, klares Öl einer Viskosität von 35 $mm^2s^{-1}$. Es hat die Zusammensetzung $Me_3Si[OSiMe_2]_{13,5}[OSiMeH]_{36,5}OSiMe_3$.

**Beispiel 12**

In einem Schneckenreaktor werden kontinuierlich 1500 kg/h α,ω-Dihydroxypolydimethylsiloxan mit einer Viskosität von ca. 120 $mm^2s^{-1}$ und 120 g/h des nach Beispiel 9 hergestellten Katalysators der durchschnittlichen Zusammensetzung $(ClMe_2SiO_{1/2})(Me_2SiO)_{314,3}PCl_2=N(-PCl_2=N)_{2,85}-PCl_2O$ dosiert. Die Temperatur im Reaktor beträgt 160 °C, der Druck 6 kPa. Nach einer mittleren Verweilzeit von ca. 2 Minuten wird der Katalysator durch kontinuierliche Zugabe von 15 ml/h Triisononylamin desaktiviert. Das Produkt, ein α,ω-Dihydroxypolydimethylsiloxan mit einer Viskosität von ca. 350000 $mm^2s^{-1}$, ist farblos, klar und geruchlos.

**Patentansprüche**

**1.** Organosiliciumreste aufweisende sauerstoffhaltige Phosphazene der allgemeinen Formel

$$Z-PCl_2=N(-PCl_2=N)_n-PCl_2O \qquad (I),$$

worin

Z einen über Sauerstoff an Phosphor gebundenen Organosiliciumrest bedeutet und
n 0 oder eine ganze Zahl von 1 bis 6 bedeutet,

mit der Maßgabe, daß die in Formel (I) dargestellten . Chloratome ganz oder teilweise durch Reste Q ersetzt sein können, wobei Q einwertige organische Reste, wie Alkoxyreste, Aryloxyreste, andere Halogenatome als Chlor, Organosiliciumreste und phosphorhaltige Reste bedeutet.

**2.** Organosiliciumreste aufweisende sauerstoffhaltige Phosphazene gemäß Anspruch 1, dadurch gekennzeichnet, daß n eine ganze Zahl von 1 bis 3 ist.

**3.** Organosiliciumreste aufweisende sauerstoffhaltige Phosphazene gemäß Anspruch 1 oder 2, dadurch gekennzeichnet, daß es sich bei Z um über Sauerstoff an Phosphor gebundene Reste aus Einheiten der allgemeinen Formel

$$R_aX_bSiO_{\frac{4-a-b}{2}} \qquad (II)$$

handelt, worin

R gleich oder verschieden sein kann und Wasserstoffatom oder einwertigen organischen Rest bedeutet,

X gleich oder verschieden sein kann und Chloratom oder Rest $-OR^1$ bedeutet mit $R^1$ gleich einwertigem organischen Rest,
a 0, 1, 2 oder 3 ist und
b 0, 1 oder 2 ist,

mit der Maßgabe, daß die Summe aus a und b kleiner oder gleich 3 ist.

**4.** Verfahren zur Herstellung von Organosiliciumreste aufweisenden sauerstoffhaltigen Phosphazenen, dadurch gekennzeichnet, daß mindestens ein sauerstoffhaltiges Phosphazen der Formel

$$PCl_3{=}N(-PCl_2{=}N)_n-PCl_2O \qquad (III),$$

worin
n 0 oder eine ganze Zahl von 1 bis 6 bedeutet und die in Formel (III) dargestellten Chloratome teilweise durch Reste Q ersetzt sein können, wobei Q einwertige organische Reste, wie Alkoxyreste, Aryloxyreste, andere Halogenatome als Chlor, Organosiliciumreste und phosphorhaltige Reste bedeutet, mit der Maßgabe, daß das terminale, nicht sauerstoffhaltige Phosphoratom mindestens ein Chloratom aufweist,
mit mindestens einer Organosiliciumverbindung aus Einheiten der Formel

$$R^2{}_c(R^3O)_dSiO_{\frac{4-d-c}{2}} \qquad (IV),$$

worin

$R^2$ gleich oder verschieden sein kann und eine für Rest R angegebene Bedeutung hat,
$R^3$ gleich oder verschieden sein kann und eine für Rest $R^1$ angegebene Bedeutung hat,
c 0, 1, 2 oder 3 ist und
d 0, 1, 2 oder 3 ist,

mit der Maßgabe, daß die Summe aus c und d kleiner oder gleich vier ist,
umgesetzt wird.

**5.** Verfahren nach Anspruch 4, dadurch gekennzeichnet, daß die Organosiliciumverbindung aus Einheiten der Formel (IV) in Mengen von 20 bis 10000 Gewichtsprozent, bezogen auf das Gesamtgewicht an eingesetztem sauerstoffhaltigen Phosphazen der Formel (III), eingesetzt wird.

**6.** Verfahren zur Herstellung sauerstoffhaltiger Phosphazene der Formel

$$PCl_3{=}N(-PCl_2{=}N)_n-PCl_2O \qquad (III),$$

worin
n 0 oder eine ganze Zahl von 1 bis 6 bedeutet und die in Formel (III) dargestellten Chloratome teilweise durch Reste Q ersetzt sein können, wobei Q einwertige organische Reste, wie Alkoxyreste, Aryloxyreste, andere Halogenatome als Chlor, Organosiliciumreste und phosphorhaltige Reste bedeutet, mit der Maßgabe, daß das terminale, nicht sauerstoffhaltige Phosphoratom mindestens ein Chloratom aufweist,
dadurch gekennzeichnet, daß ionische Phosphazene der Formel

$$[PCl_3{=}N(-PCl_2{=}N)_n-PCl_3]^+ A \qquad (V),$$

worin

n 0 oder eine ganze Zahl von 1 bis 6 bedeutet,
A ein einfach negativ geladenes Ion ist und die in Formel (V) dargestellten Chloratome teilweise durch Reste

Q ersetzt sein können, wobei Q die oben angegebene Bedeutung hat,

mit Hydroxylgruppen aufweisenden Verbindungen umgesetzt werden, mit der Maßgabe, daß falls Anion A unter den gewählten Reaktionsbedingungen unreaktiv gegenüber der Hydroxylgruppen aufweisenden Verbindung ist, ein Mol einer eine Hydroxylgruppe enthaltenden Verbindung pro Mol ionischem Chlorphosphazen der Formel (V) eingesetzt wird und falls Anion A unter den gewählten Reaktionsbedingungen reaktiv gegenüber der Hydroxylgruppen aufweisenden Verbindung ist, eine um diese Reaktivität des Anions A erhöhte Menge an eine Hydroxylgruppe aufweisender Verbindung eingesetzt wird.

**7.** Verfahren nach Anspruch 6, dadurch gekennzeichnet, daß es sich bei den Hydroxylgruppen aufweisenden Verbindungen um solche, ausgewählt aus der Gruppe bestehend aus Wasser, Alkohole, Carbonsäuren, Phosphor- und Phosphonsäuren sowie deren Monoester, Sulfonsäuren, Silanole sowie Organopolysiloxane mit Si-gebundenen Hydroxylgruppen, handelt.

**8.** Verfahren zum Kondensieren und/oder Äquilibrieren von organosiliciumverbindungen in Gegenwart von Organosiliciumreste aufweisenden sauerstoffhaltigen Phosphazenen gemäß Anspruch 1.

**9.** Verfahren nach Anspruch 8, dadurch gekennzeichnet, daß die Organosiliciumreste aufweisenden sauerstoffhaltigen Phosphazene in Mengen von 0,1 bis 1000 Gew.-ppm (Gewichtsteilen je Million Gewichtsteilen), bezogen auf das Gesamtgewicht der zu kondensierenden und/oder zu äquilibrierenden organosiliciumverbindungen, eingesetzt werden.

## Claims

**1.** Oxygen-containing phosphazenes containing organosilicon radicals of the general formula

$$Z\text{-}PCl_2{=}N(\text{-}PCl_2{=}N)_n\text{-}PCl_2O \qquad (I)$$

in which

Z denotes an organosilicon radical bonded to phosphorus via oxygen and
n denotes 0 or an integer from 1 to 6

with the proviso that all or some of the chlorine atoms can be replaced by radicals Q, in which Q denotes monovalent organic radicals, such as alkoxy radicals, aryloxy radicals, halogen atoms other than chlorine, organosilicon radicals and phosphorus-containing radicals.

**2.** Oxygen-containing phosphazenes containing organosilicon radicals according to Claim 1, characterized in that n is an integer from 1 to 3.

**3.** Oxygen-containing phosphazenes containing organosilicon radicals according to Claim 1 or 2, characterized in that Z are radicals, bonded to phosphorus via oxygen, comprising units of the general formula

$$R_aX_bSiO_{\frac{4-a-b}{2}} \qquad (II)$$

in which

R can be identical or different and denotes a hydrogen atom or a monovalent organic radical,
X can be identical or different and denotes a chlorine atom or a radical $-OR^1$, where $R^1$ is a monovalent organic radical,
a is 0, 1, 2 or 3, and
b is 0, 1 or 2,

with the proviso that the sum of a and b is less than or equal to 3.

4. Process for the preparation of oxygen-containing phosphazenes containing organosilicon radicals, characterized in that at least one oxygen-containing phosphazene of the formula

$$PCl_3{=}N(-PCl_2{=}N)_n\text{-}PCl_2O \qquad (III),$$

in which

n denotes 0 or an integer from 1 to 6

and in formula (III) all or some of the chlorine atoms can be replaced by radicals Q, in which Q denotes monovalent organic radicals, such as alkoxy radicals, aryloxy radicals, halogen atoms other than chlorine, organosilicon radicals and phosphorus-containing radicals, with the proviso that the terminal phosphorus atom, which does not contain oxygen, has at least one chlorine atom, is reacted with at least one organosilicon compound comprising units of the formula

$$R^2_c(R^3O)_dSiO_{\frac{4-d-c}{2}} \qquad (IV),$$

in which

$R^2$ can be identical or different and has one of the meanings given for the radical R,
$R^3$ can be identical or different and has one of the meanings given for the radical $R^1$,
c is 0, 1, 2 or 3, and
d is 0, 1, 2 or 3,

with the proviso that the sum of c and d is less than or equal to four.

5. Process according to Claim 4, characterized in that the organosilicon compound comprising units of the formula (IV) is employed in amounts of 20 to 10000 per cent by weight, based on the total weight of oxygen-containing phosphazene of the formula (III) employed.

6. Process for the preparation of oxygen-containing phosphazene of the formula

$$PCl_3{=}N(-PCl_2{=}N)_n\text{-}PCl_2O \qquad (III)$$

in which

n denotes 0 or an integer from 1 to 6

and in formula (III) all or some of the chlorine atoms can be replaced by radicals Q, in which Q denotes monovalent organic radicals, such as alkoxy radicals, aryloxy radicals, halogen atoms other than chlorine, organosilicon radicals and phosphorus-containing radicals, with the proviso that the terminal phosphorus atom, which does not contain oxygen, has at least one chlorine atom,
characterized in that ionic phosphazene of the formula

$$[PCl_3{=}N(-PCl_2{=}N)_n\text{-}PCl_3]^+A \qquad (V),$$

in which

n denotes 0 or an integer from 1 to 6,
A is a singly negatively charged ion, and

some of the chlorine atoms in formula (V) can be replaced by radicals Q, in which Q has the abovementioned

meaning, are reacted with compounds containing hydroxyl groups, with the proviso that, if anion A is unreactive towards the compound containing hydroxyl groups under the reaction conditions chosen, one mole of a compound containing a hydroxyl group is employed per mole of ionic chlorophosphazene of the formula (V) and, if anion A is reactive towards the compound containing hydroxyl groups under the reaction conditions chosen, an amount of compound containing a hydroxyl group is employed which is raised by this reactivity of the anion A.

**7.** Process according to Claim 6, characterized in that the compounds containing hydroxyl groups are compounds chosen from the group comprising water, alcohols, carboxylic acids, phosphoric and phosphonic acids and monoesters thereof, sulphonic acids, silanols and organopolysiloxanes having Si-bonded hydroxyl groups.

**8.** Process for the condensation and/or equilibration of organosilicon compounds in the presence of oxygen-containing chlorophosphazenes containing organosilicon radicals according to Claim 1.

**9.** Process according to Claim 8, characterized in that the oxygen-containing phosphazenes containing organosilicon radicals are employed in an amount of 0.1 to 1000 ppm by weight (parts by weight per million parts by weight), based on the total weight of the organosilicon compounds to be subjected to condensation and/or to be equilibrated.

## Revendications

**1.** Phosphazènes oxygénés contenant des groupes organosiliciques, de formule générale

$$Z\text{-}PCl_2{=}N(\text{-}PCl_2{=}N)_n\text{-}PCl_2O \qquad (I)$$

dans laquelle

Z représente un groupe organosilicique lié au phosphore par un oxygène, et
n représente 0 ou un nombre entier de 1 à 6,

avec la condition que les atomes de chlore représentés dans la formule (I) peuvent être complètement ou partiellement remplacés par des radicaux Q, où Q représente un radical organique monovalent tel que un radical alcoxy, un radical aryloxy, un autre atome d'halogène que le chlore, un radical organosilicique et un radical phosphoré.

**2.** Phosphazènes oxygénés contenant des groupes organosiliciques suivant la revendication 1, caractérisés en ce que n est un nombre entier de 1 à 3.

**3.** Phosphazènes oxygénés contenant des groupes organosiliciques suivant la revendication 1 ou 2, caractérisés en ce que Z consiste en un radical lié au phosphore par un oxygène, parmi les unités de formule générale

$$R_aX_bSiO_{4\text{-}a\text{-}b/2} \qquad (II)$$

où

R peut être identique ou différent et représente un atome d'hydrogène ou un radical organique monovalent;
X peut être identique ou différent et représente un atome de chlore ou un radical $-OR^1$, avec $R^1$ étant un radical organique monovalent;
a est 0, 1, 2 ou 3, et
b est 0, 1 ou 2,

avec la condition que la somme de a et de b est inférieure ou égale à 3.

**4.** Procédé de préparation des phosphazènes oxygénés contenant des groupes organosiliciques, caractérisé en ce que l'on fait réagir au moins un phosphazène oxygéné de formule

$$PCl_3{=}N(-PCl_2{=}N)_n{-}PCl_2O \qquad (III)$$

dans laquelle

n représente 0 ou un nombre entier de 1 à 6, et
les atomes de chlore représentés dans la formule (III) peuvent être partiellement remplacés par des radicaux Q, où Q représente un radical organique monovalent tel que un radical alcoxy, un radical aryloxy, un autre atome d'halogène que le chlore, un radical organosilicique et un radical phosphoré,
avec la condition que le phosphore terminal, non oxygéné présente au moins un atome de chlore,
avec au moins un composé organosilicique d'unités de formule

$$R^2{}_c(R^3O)_dSiO_{4\text{-}d\text{-}c/2} \qquad (IV)$$

où

$R^2$ peut être identique ou différent et a une signification donnée pour le radical R;
$R^3$ peut être identique ou différent et a une signification donnée pour le radical $R^1$;
c est 0, 1, 2 ou 3, et
d est 0, 1, 2 ou 3,

avec la condition que la somme de c et de d est inférieure ou égale à 4.

**5.** Procédé suivant la revendication 4, caractérisé en ce que l'on introduit le composé organosilicique d'unités de formule (IV) en des quantités de 20 à 10 000 parties en poids, sur base du poids total de phosphazène oxygéné de formule (III) introduit.

**6.** Procédé de préparation de phosphazènes oxygénés de formule

$$PCl_3{=}N(-PCl_2{=}N)_n{-}PCl_2O \qquad (III)$$

dans laquelle

n représente 0 ou un nombre entier de 1 à 6, et
les atomes de chlore représentés dans la formule (III) peuvent être partiellement remplacés par des radicaux Q, où Q représente un radical organique monovalent tel que un radical alcoxy, un radical aryloxy, un autre atome d'halogène que le chlore, un radical organosilicique et un radical phosphoré,
avec la condition que le phosphore terminal, non oxygéné présente au moins un atome de chlore,
caractérisé en ce que les phosphazènes ioniques de formule

$$[PCl_3{=}N(-PCl_2{=}N)_n{-}PCl_3]^+A \qquad (V)$$

dans laquelle
n représente 0 ou un nombre entier de 1 à 6,
A est un ion monovalent chargé négativement, et
les atomes de chlore représentés dans la formule (V) peuvent être partiellement remplacés par des radicaux Q, où Q a la signification donnée ci-dessus,
sont mis à réagir avec des composés contenant des groupes hydroxyle,

avec la condition que, dans le cas où l'anion A est non réactif, dans les conditions de réaction choisies, vis-à-vis du composé contenant des groupes hydroxyle, on introduit une mole d'un composé contenant des groupes hydroxyle par mole de chlorophosphazène ionique de formule (V) et dans le cas où l'anion A est réactif, dans les conditions de réaction choisies, vis-à-vis du composé contenant des groupes hydroxyle, on introduit une quantité augmentée en composé contenant des groupes hydroxyle, à cause de cette réactivité des anions A.

**7.** Procédé suivant la revendication 6, caractérisé en ce que les composés contenant des groupes hydroxyle consistent en ceux choisis dans le groupe constitué de l'eau, des alcools, des acides carboxyliques, des acides phosphoriques et phosphoniques ainsi que leurs monoesters, des acides sulfoniques, des silanols ainsi que des organopolysiloxanes avec des groupes hydroxyle liés à Si.

**8.** Procédé pour condenser et/ou équilibrer des composés organosiliciques en présence de phosphazènes oxygénés contenant des groupes organosiliciques suivant la revendication 1.

**9.** Procédé suivant la revendication 8, caractérisé en ce que les phosphazènes oxygénés contenant des groupes organosiliciques sont introduits en des quantités de 0,1 à 1000 ppm en poids (parties en poids par million de parties en poids), sur base du poids total des composés organosiliciques à condenser et/ou à équilibrer.